# EUROPEAN PATENT APPLICATION

(11) **EP 3 162 500 A1**
(43) Date of publication of application: **03.05.2017**
(21) Application number: 16194544.9
(22) Date of filing: 19.10.2016
(51) Int. Cl.: B24B 31/00, B64D 41/00, G01B 21/30

(54) **METHOD OF MANUFACTURING AN ACTUATOR ASSEMBLY COMPONENT AND METHOD OF VERIFYING SURFACE FINISH**

(30) Priority: 20.10.2015 US 201514887657
(71) Applicant: Hamilton Sundstrand Corporation, Charlotte, NC 28217-4578 (US)
(72) Inventor: CHODAKOWSKI, Pawel P., Fairfield, CA 94533 (US); BANNON, David G., Rockford, IL 61107 (US)
(74) Representative: Iceton, Greg James

(57) **Abstract**

A method of manufacturing an actuator assembly component is provided. The method includes tumble polishing the actuator assembly component. The method also includes taking at least one bearing ratio measurement along a portion of a surface of the actuator assembly component. The method further includes comparing the at least one bearing ratio measurement to a minimum bearing ratio value to verify that the actuator assembly component has been tumble polished.

## Description

### BACKGROUND OF THE INVENTION

The embodiments herein generally relate to actuator assembly components and, more particularly, to a method of manufacturing such components, as well as verifying a surface finish of such components.

Actuator assemblies are used in a wide variety of applications to initiate movement of one or more components. Some actuator assemblies include a pawl that interacts with one or more components in a sliding and/or rolling manner to facilitate the desired movement of the system components. In such systems, frictional forces and rolling friction occurs during initial actuator release. Surface finish characterization at these locations plays a role in establishing the effects friction has on deployment and release margin of the actuator. More particularly, rough lay or improperly defined surface finish parameters may lead to higher than expected coefficient of friction values on key sliding surfaces which interact with each other during actuator deployment. The surface finish and the component geometry define the self-locking coefficient of friction at the interfaces. Therefore, proper material combinations for the surfaces of interest need to be chosen to ensure the overall coefficient of friction is well below a self-locking value. Unfortunately, a surface finish may appear to be adequately machined or finished, but in fact is not properly verified.

### BRIEF DESCRIPTION OF THE INVENTION

According to one embodiment, a method of manufacturing an actuator assembly component is provided. The method includes tumble polishing the actuator assembly component. The method also includes taking at least one bearing ratio measurement along a portion of a surface of the actuator assembly component. The method further includes comparing the at least one bearing ratio measurement to a pre-determined minimum bearing ratio value to verify that the actuator assembly component has been tumble polished.

According to another embodiment, a method of verifying a surface finish of an actuator assembly component is provided. The method includes taking at least one bearing ratio measurement along a portion of a surface of the actuator assembly component. The method also includes comparing the at least one bearing ratio measurement to a pre-determined minimum bearing ratio value to determine if the actuator assembly component has been tumble polished.

### BRIEF DESCRIPTION OF THE DRAWINGS

The subject matter which is regarded as the invention is particularly pointed out and distinctly claimed in the claims at the conclusion of the specification. The foregoing and other features and advantages of the invention are apparent from the following detailed description taken in conjunction with the accompanying drawings in which:
FIG. 1 is a cross-sectional view of a portion of an actuator assembly in a first position;
FIG. 2 is a cross-sectional view of a portion of the actuator assembly in a second position; and
FIG. 3 is an enlarged view of a pawl of the actuator assembly illustrating frictional contact interface locations of the pawl.

### DETAILED DESCRIPTION OF THE INVENTION

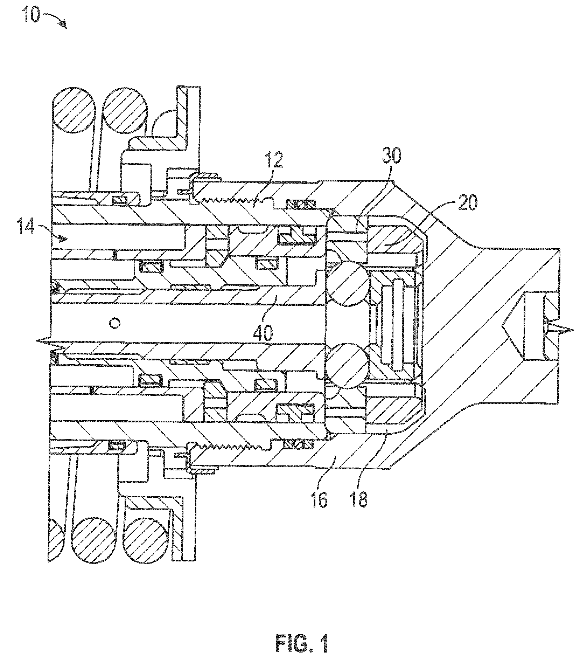

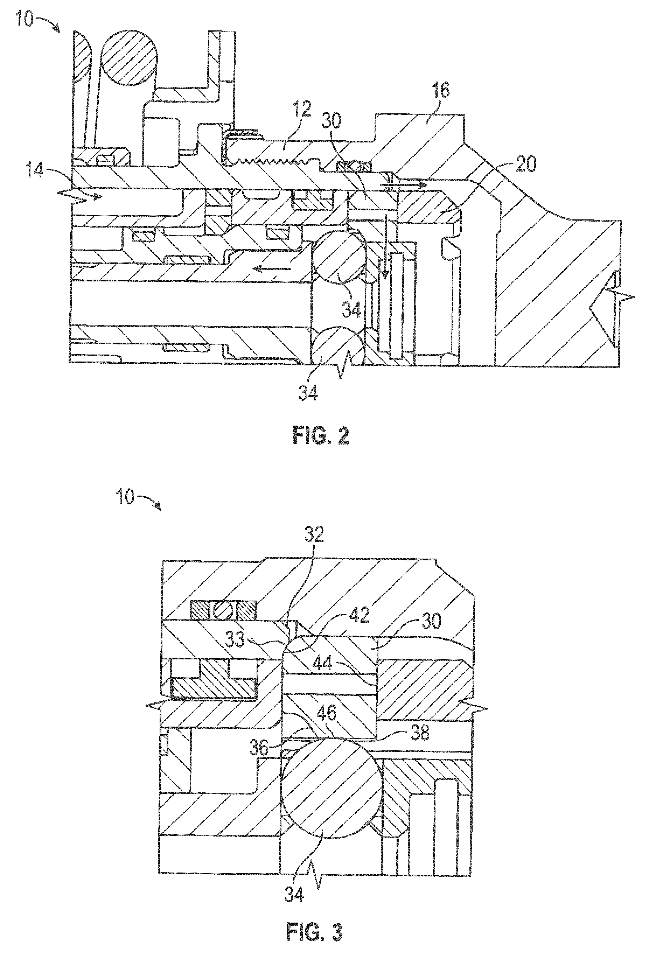

Referring to FIGS. 1 and 2, illustrated is a portion of an actuator assembly that is generally referenced with numeral 10. The actuator assembly 10 comprises an elongated hollow cylinder 12 defining a bore 14 therein. A cylinder rod end cap 16 is operatively coupled to a beveled end of the cylinder 12 and provides an annular recess 18 between it and the cylinder 12. A piston is slidably received in the bore 14 of the cylinder 12. A rod portion 20 of the piston projects from a rod end of the cylinder 12 and is adapted to provide a pushing action in a direction away from the cylinder head end or a pulling action in a direction toward the cylinder head end.

In some embodiments, the actuator assembly is disposed on an aircraft and is a deployment actuator associated with a ram air turbine. In such embodiments, the actuator assembly interacts with the ram air turbine and controls a position of a door on the aircraft. In the illustrated embodiments, FIG. 1 illustrates the actuator assembly 10 in a first position (e.g., stowed position) and FIG. 2 illustrates the actuator assembly 10 in a second position (e.g., deploying position). Although described in the aircraft example above, it is to be appreciated that the embodiments disclosed herein may benefit numerous applications that have sliding interfaces with critical coefficient of frictions associated with them.

Referring now to FIG. 3, with continued reference to FIGS. 1 and 2, a portion of the actuator assembly 10 is illustrated in greater detail. At least one locking pawl 30 is slidably disposed in radial apertures. In the illustrated embodiment, two locking pawls are illustrated, but it is to be appreciated that one or more pawls may be included. The outer ends of the pawl 30 includes beveled surfaces 32 for engaging and cooperating with a beveled surface 33 on the end of the cylinder 12. The inner end of the pawl 30 is provided with a sloped surface 36 terminating in a substantially flat surface 38.

In operation, in order to retract and lock the actuator in the retracted position, hydraulic or other fluid pressure is introduced to the bore 14 of the cylinder 12. At this time, a lock bolt 40 is axially displaced and held in this position by retraction of the pawl 32 which is confined in the inward radial direction by the cylinder 12. The fluid pressure drives the cylinder 12 into its retracted position and the lock bolt 40 into its latching position with rollers beneath the pawl. The pawl 30 includes multiple interfaces with other components where frictional forces occur. In particular, interfaces 42 and 44 represent locations where sliding friction occurs and interface 46 represents a location where rolling friction occurs. The coefficient of friction at these locations is determined by component geometry and material properties. The coefficient of friction must be such that self-locking of the components does not occur, where self-locking is defined by a condition where the friction forces inhibit or prevent relative movement of the components subjected to the frictional forces, thereby impairing operation of the actuator assembly 10.

A method of manufacturing the components of the actuator assembly 10 are disclosed herein, with the method ensuring that the coefficient of friction at each interface 42, 44 and 46 is suitable for operation of the actuator assembly 10. It has been empirically determined that tumble polishing the pawl surfaces at the interface locations 42, 44 and 46 results in a coefficient of friction that is suitable. As such, the surfaces of the pawl 32, the cylinder 12 and the rod 20 are tumble polished. In some embodiments, the segments of the components are tumble polished as individual segments.

To prevent an improper visual verification of the surfaces or improper verification using conventional surface analysis techniques from occurring, the method includes verifying that tumble polishing has occurred with the use of a surface finish analyzer to measure specific parameters. This excludes the possibility of accepting a machined surface that has not been tumble polished based on conventional surface finish measurements. The surface finish analyzer may be selected from numerous acceptable lab instruments. In some embodiments, the surface finish analyzer is a profilometer with a stylus tip, for example, however, alternatives are contemplated. Regardless of the precise surface finish analyzer employed, at least one bearing ratio measurement is taken and compared to a pre-determined minimum bearing ratio value to verify that tumble polishing has occurred.

In some embodiments, the components associated with interfaces 42, 44 and 46 are polished in their entireties as individual segments. As described above at least one bearing ratio measurement is taken, but in some embodiments two or more readings are required. The surface finish measurements are made over a minimum of two sampling lengths whose cutoff ranges from about 0.010 inches to about 0.030 inches. The minimum bearing ratio measurement must be 50 percent at 10.0 microinches cut depth measured down from a 5% reference line. The example described above is merely an illustrative example and it is to be understood that deviations may occur from application-to-application.

Advantageously, suitable coefficient of friction is verified at each interface 42, 44 and 46. This provides consistent deployment of the actuator assembly and improved margin from self-locking coefficient of friction. Additionally, surface finish variation is reduced by providing more repeatable surface finish results. The method disclosed herein also reduces risk associated with altering geometry of the components (e.g., surface angles) since the operation is performed by a tumbling machine rather than by hand polishing.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A method of manufacturing an actuator assembly component comprising:
tumble polishing the actuator assembly component;
taking at least one bearing ratio measurement along a portion of a surface of the actuator assembly component; and
comparing the at least one bearing ratio measurement to a minimum bearing ratio value to verify that the actuator assembly component has been tumble polished.

2. The method of claim 1, wherein the entire actuator assembly component is tumble polished.

3. The method of claim 2, wherein the entire actuator assembly component is tumble polished as individual segments.

4. The method of claim 1, wherein the at least one bearing ratio measurement is taken with a surface finish analyzer.

5. The method of claim 4, wherein the surface finish analyzer comprises a profilometer.

6. The method of claim 4, wherein the surface finish analyzer comprises a stylus tip.

7. The method of claim 1, wherein the actuator assembly component is an uplock pawl of a ram air turbine disposed on an aircraft.

8. The method of claim 1, wherein at least two bearing ratio measurements are taken.

9. The method of claim 1, wherein the minimum bearing ratio value is 50 percent at a 10.0 microinch cut depth.

10. A method of verifying a surface finish of an actuator assembly component comprising:
taking at least one bearing ratio measurement along a portion of a surface of the actuator assembly component; and
comparing the at least one bearing ratio measurement to a minimum bearing ratio value to determine if the actuator assembly component has been tumble polished.

11. The method of claim 10, wherein the at least one bearing ratio measurement is taken with a surface finish analyzer.

12. The method of claim 11, wherein the surface finish analyzer comprises one of a profilometer and a stylus tip.

13. The method of claim 10, wherein the actuator assembly component is an uplock pawl of a ram air turbine disposed on an aircraft.

14. The method of claim 10, wherein at least two bearing ratio measurements are taken.

15. The method of claim 10, wherein the minimum bearing ratio value is 50 percent at a 10.0 microinch cut depth.
